# DEMANDE DE BREVET EUROPEEN

(11) **EP 0 593 830 A1**
(43) Date de publication de la demande: **27.04.1994**
(21) Numéro de dépôt: 92420364.9
(22) Date de dépôt: 19.10.1992
(51) Int. Cl.: F16B 12/24, A47B 47/04

(54) **Dispositif d'assemblage démontable pour meubles et autres structures**

(71) Demandeur: Vigneron, Gérard, F-26150 Die (FR); Voulet, Denis, F-26150 Die (FR)
(72) Inventeur: Vigneron, Gérard, F-26150 Die (FR); Voulet, Denis, F-26150 Die (FR)
(74) Mandataire: Bratel, Gérard

(57) **Abrégé**

Le dispositif assure la jonction d'éléments allongés (1,2,3) possèdant une section de forme générale carrée et présentant une rainure longitudinale (4) sur chacune de leurs faces latérales, des trous (5) étant ménagés au fond des rainures (4) selon un pas régulier (P). Ces trous reçoivent des pièces d'assemblage (8,9) possèdant chacune deux ou trois branches (10) formant entre elles un angle droit. Un premier tenon (11) est formé au point de raccordement des branches (10), et d'autres tenons (12) sont formés aux extrémités des branches (10). Tous les tenons (11,12) sont parallèles entre eux, sont tournés dans la même direction et sont perpendiculaires au plan défini par les branches (10), la distance entre le premier tenon (11) et chacun des autres tenons (12) étant égale au pas (P).

Applications : jonction en "L" ou "T" de deux ou trois éléments (1,2,3), pour l'assemblage d'un meuble.

## Description

La présente invention concerne un dispositif d'assemblage démontable pour meubles et autres structures similaires telles que rayonnages et étagères, destines a un usage réel ou constituant des jouets.

On connaît déjà de nombreux systèmes de mobilier modulaire, utilisant des éléments de base pouvant être assemblés entre eux, de façon démontable. En ce qui concerne l'ossature des meubles, il s'agit en général d'éléments allongés, devant être assemblés entre eux bout à bout ou à angle droit selon des configurations en "L" ou en "T". A cet effet, on utilise habituellement des pièces de raccordement particulières, à fonction spécialisée, telles que des équerres d'assemblage qui sont prévues uniquement pour la jonction en "L" de deux éléments. On connaît aussi des systèmes d'assemblage autorisant des raccordements entre éléments selon diverses configurations, mais ces systèmes nécessitent de façon générale des accessoires tels que des vis, en particulier pour obtenir une réelle immobilisation d'un élément par rapport à un autre dans la zone d'assemblage, ce qui complique non seulement leur structure mais aussi leur utilisation.

La présente invention vise à éliminer ces inconvénients, en fournissant un dispositif d'assemblage qui, tout en étant de conception simple et d'un maniement aisé, en particulier grâce à la suppression de tous accessoires tels que vis, offre des possibilités multiples à partir de pièces en nombre très limité, et assure une jonction rigide et résistante des éléments à assembler.

A cet effet, l'invention a essentiellement pour objet un dispositif d'assemblage démontable pour meubles et autres structures qui comprend, pour la jonction d'éléments allongés possédant une section de forme générale carrée et présentant une rainure longitudinale sur chacune de leurs faces latérales, avec des trous ménagés au fond des rainures selon un pas régulier, des pièces d'assemblage possédant chacune au moins deux branches, disposées a angle droit et présentant un premier tenon forme au point de raccordement des branches et d'autres tenons formes aux extrémités des branches, tous les tenons étant parallèles entre eux, tournés dans la même direction et perpendiculaires au plan défini par les branches, la distance entre le premier tenon et chacun des autres tenons étant égale au pas précité.

Ainsi, ce dispositif assure l'assemblage d'éléments allongés en bois ou autre matériau, ayant un profil particulier leur conférant une résistance mécanique élevée et aptes à constituer des poutrelles verticales ou horizontales d'une ossature de meuble ou d'une autre structure, les faces extrêmes de ces éléments comportant aussi des trous permettant leur préassemblage au moyen de tourillons, tandis que leurs rainures longitudinales sont utilisables pour le montage de panneaux fixes.

Pour la jonction en "L" de deux éléments, on utilise plus particulièrement des pièces d'assemblage possédant chacune deux branches formant un angle droit, et au total trois tenons qui sont introduits dans des trous débouchant au fond de rainures longitudinales de ces éléments. Pour la jonction en "T" de deux ou trois éléments, on utilise des pièces d'assemblage possédant chacune trois branches formant deux à deux des angles droits, et au total quatre tenons.

De préférence, chaque branche des pièces d'assemblage (à trois ou quatre tenons) présente un évidement s'étendant sensiblement sur la moitié de la longueur de cette branche à partir du premier tenon, le fond de chaque évidement étant plat et tourne vers le côte ou se situent les tenons. Grâce à de tels évidements, les branches des pièces d'assemblage peuvent, si leur orientation l'exige, passer au-dessus des parties en relief situées sur les côtés des rainures longitudinales des éléments à assembler.

Avantageusement, les pièces d'assemblage sont réalisées en matière synthétique moulée, possédant des propriétés d'élasticité, ces pièces d'assemblage se présentant ainsi comme des "clips" dont les tenons peuvent être engagés en force dans les trous correspondants des éléments à assembler, ce qui garantit le serrage entre lesdits éléments tout en autorisant leur démontage.

De toute façon, l'invention sera mieux comprise à l'aide de la description qui suit, en référence au dessin schématique annexé représentant, à titre d'exemple non limitatif, une forme d'exécution de ce dispositif d'assemblage démontable pour meubles et autres structures :
Figure 1 est une vue en perspective éclatée, montrant divers éléments a assembler, et leurs moyens d'assemblage, conformes à la présente invention ;
Figure 2 est une vue en perspective d'une pièce d'assemblage seule ;
Figure 3 est une vue en coupe au travers d'éléments assemblés par le dispositif objet de l'invention ;
Figure 4 est une vue de face, illustrant l'application de l'invention à l'assemblage d'un meuble en éléments.

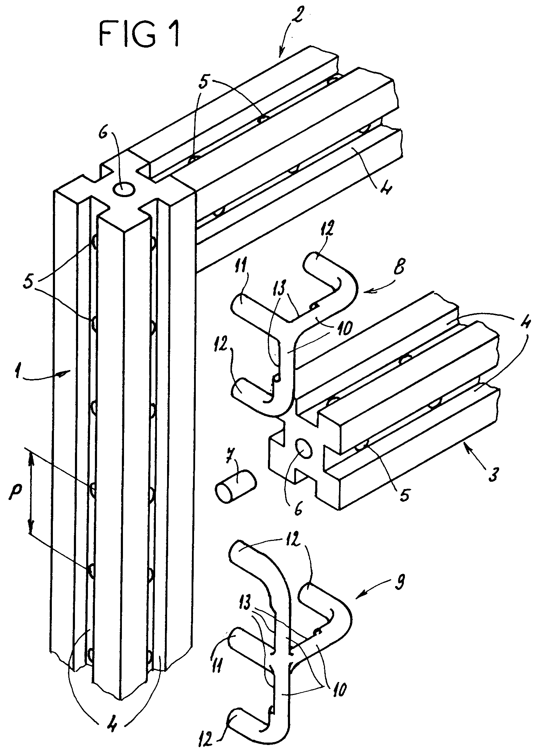

Comme le montre la figure 1, l'invention fournit un dispositif d'assemblage pour des éléments allongés 1, 2 ou 3, réalisés par exemple en bois ou en matière synthétique, qui possèdent une section de forme générale carrée, avec une rainure longitudinale 4 sur chacune de leurs quatre faces latérales. Chaque rainure longitudinales 4 présente une section rectangulaire. Des trous traversants 5 relient les fonds des rainures 4 opposées, les trous 5 étant ménagés à intervalles réguliers, selon un pas P, sur toute la longueur de chaque élément 1, 2 ou 3, et les trous 5 extrêmes se trouvant à la distance P/2 de la face d'extrémité voisine. De plus, chacun des ces éléments 1, 2 ou 3 comporte un trou 6 perce suivant son axe longitudinal, à chacune de ses extrémités.

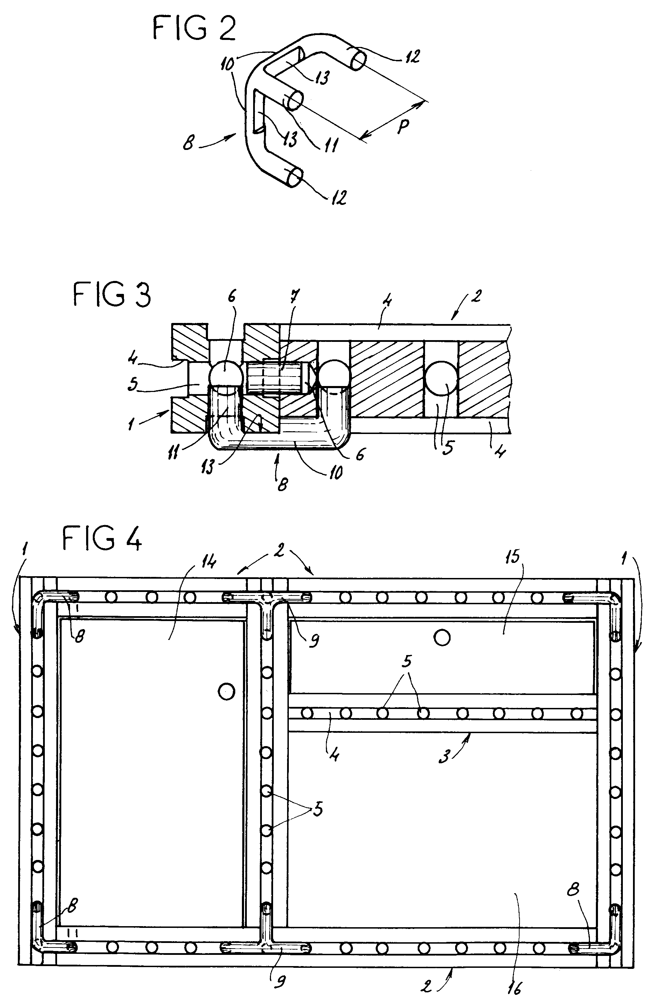

Les éléments 1, 2 et 3 sont prévus pour être assemblés entre eux, notamment avec des configurations en "L" et en "T", pour former des structures bidimensionnelles ou tridimensionnelles, pouvant constituer notamment des ossatures de meubles. A cet effet, un préassemblage est réalisé au moyen de tourillons 7, aptes à être introduits dans les trous précités 5 et 6 pour effectuer un raccordement entre les éléments 1, 2 et 3 - voir aussi la figure 3 qui est une vue en coupe passant par la zone d'assemblage des éléments 1 et 2 de la figure 1.

Le système d'assemblage proposé utilise encore des pièces particulières ou clips, désignées globalement par 8 et 9 sur la figure 1, de préférence réalisées en matière synthétique moulée possédant une certaine élasticité. La figure 2 montre, isolée, la pièce d'assemblage 8 prévue pour la jonction en "L" de deux éléments, tels que les éléments 1 et 2.

La pièce d'assemblage 8 possède deux branches 10, formant une équerre. Un premier tenon 11 est formé au point de raccordement des deux branches 10. Deux autres tenons 12 sont formés, respectivement, aux extrémités des deux branches 10. Lès trois tenons 11, 12 sont parallèles entre eux, tournés dans la même direction, et perpendiculaires au plan défini par les deux branches 10. L'entraxe de chaque paire de tenons 11, 12 est égal au pas P précédemment défini. Les branches 10 et les tenons 11, 12 possèdent une section courante circulaire. Cependant, chaque branche 10 de la pièce 8 présente un évidement 13, s'étendant sensiblement sur la moitié de sa longueur à partir du tenon 11 ; le fond de chaque évidement 13 est plat, et tourné vers le côté où se situent les tenons 11, 12.

Comme l'illustrent les figures 1 et 3, la pièce 8 assure le renforcement de l'assemblage en "L" des éléments 1 et 2, par engagement en force de ses tenons 11, 12 dans des trous 5 appartenant à ces deux éléments. Les branches 10 de la pièce 8 prennent place, partiellement, dans des rainures longitudinales 4 des éléments 1 et 2, ces branches 10 "suivant" l'angle formé par les deux éléments 1 et 2 disposés en "L". L'évidement 13 de l'une des branches 10 permet le passage de cette dernière sur l'une des parties en relief de l'élément 1, située sur le côté d'une rainure 4. Plus particulièrement, dans l'exemple illustré au dessin, le tenon 11 et l'un des tenons 12 de la pièce 8 sont engagés dans des trous 5 de l'élément 1, et seul l'autre tenon 12 de cette pièce 8 est engagé dans un trou 5 de l'élément 2.

La pièce d'assemblage 9, visible au bas de la figure 1, est conçue selon le même principe que la pièce 8, mais elle possède trois branches 10, formant deux à deux des angles droits avec une configuration d'ensemble en "T". Un tenon central 11 est formé au point de raccordement des trois branches 10, et trois autres tenons 12, parallèles au précédent, sont formés respectivement aux extrémités des trois branches 10, lesquelles présentent encore des évidements 13. Une telle pièce d'assemblage 9 est utilisable pour réunir deux éléments 1 et 3 disposés en "T".

D'autres possibilités d'utilisation sont illustrées par la figure 4, qui montre la façade d'un meuble en éléments du genre armoire, dont l'assemblage est réalisable par le dispositif objet de l'invention. L'ossature du meuble comporte des éléments verticaux 1, des éléments horizontaux supérieur et inférieur 2, et un élément horizontal intermédiaire 3. Ces éléments 1, 2 et 3 délimitent des cadres rectangulaires, pouvant recevoir par exemple une porte pivotante 14, un tiroir 15 ou un panneau fixe 16. On remarque que les pièces d'assemblage 8 assurent la jonction des éléments 1 et 2 aux angles du meuble, et qu'une pièce d'assemblage 9 peut assurer à elle seule la jonction d'un élément vertical 1 et de deux éléments horizontaux 2. Certains trous 5 des éléments horizontaux 2 sont utilisables pour l'articulation de la porte 14, tandis que les rainures longitudinales 4 des divers éléments 1, 2 et 3 sont utilisable pour maintenir le panneau fixe 16 par ses bords.

Comme il va de soi, l'invention ne se limite pas à la seule forme d'exécution de ce dispositif d'assemblage démontable qui a été décrite ci-dessus, à titre d'exemple ; elle en embrasse, au contraire, toutes les variantes de réalisation et d'application respectant le même principe. Ainsi, l'on ne s'éloignerait pas du cadre de l'invention par des modifications de détail, concernant les formes et matériaux des éléments et pièces décrits, ou par une utilisation dans des structures autres que des meubles, le dispositif proposé convenant aussi pour l'assemblage de rayonnages, d'étagères et plus généralement de toute structure en éléments, non seulement pour l'équipement domestique mais aussi dans le domaine des jouets du genre "jeu de construction".

## Revendications

1. Dispositif d'assemblage démontable pour meubles et autres structures en éléments, caractérise en ce qu'il comprend, pour la jonction d'éléments allongés (1,2,3) possèdant une section de forme générale carrée et présentant une rainure longitudinale (4) sur chacune de leurs faces latérales, avec des trous (5) ménagés au fond des rainures (4) selon un pas régulier (P), des pièces d'assemblage (8,9) possèdant chacune au moins deux branches (10) disposées à angle droit et présentant un premier tenon (11) formé au point de raccordement des branches (10) et d'autres tenons (12) formés aux extrémités des branches (10), tous les tenons (11,12) étant parallèles entre eux, tournés dans la même direction et perpendiculaires au plan défini par les branches (10), la distance entre le premier tenon (11) et chacun des autres tenons (12) étant égale au pas (P) précité.

2. Dispositif d'assemblage démontable pour meubles et autres structures selon la revendication 1, caractérisé en ce qu'il comprend, notamment pour la jonction en "L" de deux éléments (1,2), des pièces d'assemblage (8) possèdant chacune deux branches (10) formant un angle droit et au total trois tenons (11,12).

3. Dispositif d'assemblage démontable pour meubles et autres structures selon la revendication 1 ou 2, caractérisé en ce qu'il comprend, notamment pour la jonction en "T" de deux ou trois éléments (1,2,3), des pièces d'assemblage possèdant chacune trois branches (10) formant deux à deux des angles droits, et au total quatre tenons (11,12).

4. Dispositif d'assemblage démontable pour meubles et autres structures selon l'une quelconque des revendications 1 à 3, caractérisé en ce que chaque branche (10) des pièces d'assemblage (8,9) présente un évidement (13) s'étendant sensiblement sur la moitié de la longueur de cette branche (10) à partir du premier tenon (11), le fond de chaque évidement (13) étant plat et tourné vers le côté où se situent les tenons (11,12).

5. Dispositif d'assemblage démontable pour meubles et autres structures selon l'une quelconque des revendications 1 à 4, caractérisé en ce que les pièces d'assemblage (8,9) sont réalisées en matière synthétique moulée.

6. Dispositif d'assemblage démontable pour meubles et autres structures selon l'une quelconque des revendications 1 à 5, caractérisé en ce qu'il est appliqué à la jonction d'éléments allongés (1,2,3) en bois ou autre matériau, dont les faces extrêmes comportent aussi des trous (6) et qui sont préassemblés au moyen de tourillons (7).
